# EUROPEAN PATENT APPLICATION

(11) **EP 4 498 770 A1**
(43) Date of publication of application: **29.01.2025**
(21) Application number: 23775156.5
(22) Date of filing: 10.02.2023
(51) Int. Cl.: H05K 5/06, H05K 5/02, H05K 5/00

(54) **ENCLOSURE FOR PROTECTION OF WIRELESS COMMUNICATION DEVICE**

(30) Priority: 23.03.2022 KR 20220036318
(71) Applicant: Samsung Biologics Co., Ltd., Incheon 21987 (KR)
(72) Inventor: KWON, Hyeok Geon, Incheon 22009 (KR); SHIN, Min Cheol, Incheon 22868 (KR)
(74) Representative: Murgitroyd & Company
(86) International application number: PCT/KR2023/002034
(87) International publication number: WO 2023/182653

(57) **Abstract**

Provided is an enclosure for protection of a wireless communication device positioned at an opening formed to a wall of a room, the enclosure including a frame part configured to form a space that receives the wireless communication device, a mount mounted to the frame part and configured to position the wireless communication device so that an antenna of the wireless communication device faces an inside of the room, and a sealing part included in or connected to the frame part and configured to surround the wireless communication device so that the wireless communication device is not exposed to the inside of the room.

## Description

### Technical Field

The present disclosure relates to an enclosure for protection of a wireless communication device.

### Background Art

A clean room refers to a room that is built to control the concentration of particles in the air, where the generation, inflow, and retention of dust are minimized, and the temperature, humidity, and pressure are controlled as required.

When a wireless communication device or a wireless network device is installed in a clean room of a bio/pharmaceutical company, the wireless device may be changed in character or malfunction due to a chemical substance or the like for washing an inside of the clean room. Accordingly, there may be difficulty in maintenance of the device.

The wireless communication device may be installed above a clean room ceiling panel in order to avoid such difficulty. However, in this case, a wireless signal may be attenuated by the ceiling panel, so that a failure in a product production process performed in the clean room may occur.

### Detailed Description of the Invention

### Technical Goals

The present disclosure discloses an enclosure for protection of a wireless communication device, which is installed at an opening formed to a wall of a room. While the enclosure is sealed to protect the wireless communication device from a foreign substance or the like in an outside of the enclosure, the enclosure may be manufactured with a material with which a wireless signal is less attenuated and assist a wireless signal of the wireless communication device to have sufficient strength.

However, the goals to be achieved by example embodiments of the present disclosure are not limited to the objectives described above and other objects may be clearly understood from the following example embodiments.

### Technical solutions

According to an example embodiment, there is provide an enclosure for protection of a wireless communication device positioned at an opening formed to a wall of a room, the enclosure including a frame part configured to form a space that receives the wireless communication device, a mount mounted to the frame part and configured to position the wireless communication device so that an antenna of the wireless communication device faces an inside of the room, and a sealing part included in or connected to the frame part and configured to surround the wireless communication device so that the wireless communication device is not exposed to the inside of the room.

The enclosure for the protection of the wireless communication device may further include a fixation part configured to fix the enclosure to the wall at an outward side of the wall so that the enclosure is to be separated from the wall toward an outside of the room.

An entrance may be formed to the frame part so that the wireless communication device is accessible from an outside of the room.

The enclosure for the protection of the wireless communication device may further include a cover configured to cover the entrance, and a sealing ring provided at a boundary of the cover and the frame part and configured to seal a gap formed between the cover and the frame part.

The frame part may include a support part on which the mount is placed, and the mount may be fixed to the frame part so as to be separable.

The enclosure for the protection of the wireless communication device may further include a sealing member configured to seal a gap between the sealing part and the wall.

The enclosure for the protection of the wireless communication device may further include a cap configured to protect the sealing member by covering the sealing member.

The wall may be positioned at a ceiling of the room.

A material of the sealing part may be ultra high molecular weight (UHMW) polyethylene.

The room may be a clean room.

Additional aspects of example embodiments will be set forth in part in the following description and drawings.

### Effects of the Invention

The enclosure for protection of a wireless communication device assists with reducing a construction time because installation thereof is simple and easy.

According to the present disclosure, it is possible to wash a clean room without attaching and detaching the wireless communication device.

According to the present disclosure, although malfunction of the wireless communication device occurs, it is possible to maintain and repair the wireless communication device without entering the clean room.

According to the present disclosure, since a wireless signal of the wireless communication device is not interfered by a wall or a ceiling, stable performance of a process is facilitated because strength of a wireless signal is guaranteed.

Effects of the present disclosure are not limited to those described above and other effects may be made apparent to those skilled in the art from the following description of the accompanying claims.

### Brief Description of Drawings

FIG. 1 illustrates an outline diagram of a structure in which an enclosure for protection of a wireless communication device according to the present disclosure is installed to a wall.
FIG. 2 illustrates a perspective diagram in which an enclosure for protection of a wireless communication device according to the present disclosure is viewed from below.
FIG. 3 illustrates a perspective diagram in which a structure in which a wireless communication device is fixed to a mount according to the present disclosure is viewed from below.
FIG. 4 illustrates a perspective diagram in which a mount according to the present disclosure is viewed from above.
FIG. 5 illustrates a perspective diagram in which an enclosure for protection of a wireless communication device according to the present disclosure is viewed from above.

### Mode for Carrying Out the Invention

Example embodiments described in the present disclosure is to exemplify the present disclosure, not to limit the present disclosure. Those skilled in the art may configure a large number of alternative example embodiments without deviating from a category of the present disclosure which is defined by attached claims. Terms used in the example embodiments are selected, as much as possible, from general terms that are widely used at present while taking into consideration the functions obtained in accordance with the present disclosure, but these terms may be replaced by other terms based on intentions of those skilled in the art, customs, emergence of new technologies, or the like. Also, in a particular case, terms that are arbitrarily selected by the applicant of the present disclosure may be used. In this case, the meanings of these terms may be described in corresponding description parts of the disclosure. Accordingly, it should be noted that the terms used herein should be construed based on practical meanings thereof and the whole content of this specification, rather than being simply construed based on names of the terms.

Terms in a singular form used in the present specification includes all of the terms in the singular form and a plural form unless an apparently and contextually conflicting description is present.

In the entire specification, when a part is referred to as "including" elements or operations, unless a particularly conflicting description is present, it may not be understood that the part includes all the elements or operations. It may be understood that including elements or operations other than those described in the entire claims or the specification is not excluded. It may be merely understood that the other elements or operations may be further included.

Terms including an ordinal number such as "first" or "second" used in the present specification may be used to describe various elements. However, the elements may not be limited by the terms including the ordinal number. The terms are used to contextually distinguish one element from another element in a part of the specification. For example, while not deviating from the scope of the present disclosure, a first element may be referred to as a second element in another part of the specification, and reversely, the second element may be referred to as the first element in another part of the specification.

The terms "mechanism", "element", "means", and "configuration" may be widely used and are not limited to mechanical and physical components. These terms may include meaning of a series of routines of software in association with a processor.

In the present specification (particularly, in the claims), use of a term "the" and other similar terms may be applied to nouns in the singular form and the plural form. In addition, when a range is described, a description includes an individual value included in the range unless a conflicting description is present, which is identical to each individual value included in the range being described in the detailed description. Lastly, when an order of operations included in a method is not apparently described, or when a conflicting description is not present, the operations may be rearranged and performed in a proper order and may not be limited to an order of descriptions of the operations. Use of all examples or exemplary terms (e.g., "for example" or the like) is simply to describe the technical spirit in detail. Accordingly, the scope of the present disclosure is not limited by the examples or the exemplary terms unless limited by the claims. Those skilled in the art may configure a new example embodiment belonging to the claims or a category of equivalents thereof by adding various modifications, combinations, or changes to disclose example embodiments described in the present specification according to a condition and a factor for a configuration.

Hereinafter, the example embodiments of the present disclosure will be described with reference to the accompanying drawings. For simplicity of the specification and the drawings, various functional elements not associated with understanding of the present disclosure has been omitted. However, those skilled in the art may easily understand that various additional elements may be included as a part of a specific example embodiment of the present disclosure in order to allow an additional function not specifically described in the present disclosure.

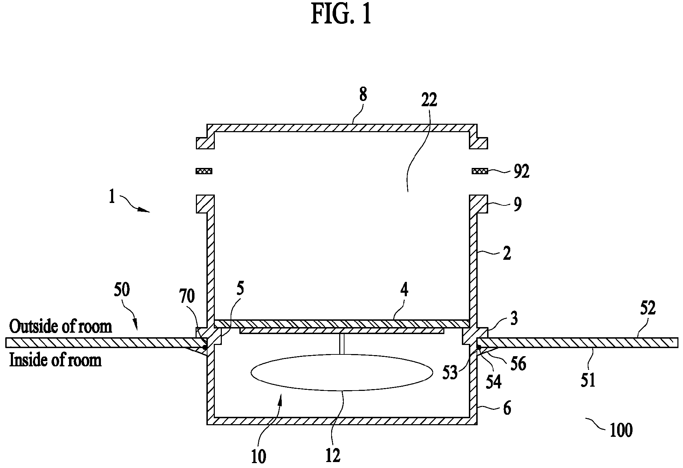

FIG. 1 illustrates an outline diagram of a structure in which an enclosure 1 for protection of a wireless communication device according to the present disclosure is installed to a wall 50. More specifically, FIG. 1 illustrates a state in which a sealing ring 92 and a cover 8 are separated from the enclosure 1 for the protection of the wireless communication device.

In an example embodiment, the enclosure 1 for the protection of the wireless communication device may be positioned at an opening 70 formed to the wall 50 of a room 100.

A wireless communication device 10 may be a terminal or an access point (AP) including a wireless communication interface (e.g., a Bluetooth^{™} device, a 802.11 device, a wireless fidelity (Wi-Fi) device, a Worldwide Interoperability for Microwave Access (WiMax) device, a cellular communication device, a near field communication (NFC) device, a ZigBee device, or the like), associated hardware (e.g., a radio frequency (RF) antenna, a modem, a modulator, a demodulator, and/or the like), or the like. The wireless communication device 10 may exchange data by wirelessly communicating with another wireless communication device existing at an inside of the room 100, an outside of the room 100, an inside of the wall 50, an opening of another wall 50, or the like.

The room 100 may be a space temporarily or semipermanently sealed for a task or a process. Specifically, the room 100 may be a clean room. The room 100 may be a space formed by the wall 50.

The wall 50 may be a structure for forming the room 100. Specifically, the wall 50 may be a ceiling of the room 100 or positioned at the ceiling. In an example embodiment shown in FIG. 1, the wall 50 is illustrated as the ceiling of the room 100, but the present disclosure is not limited thereto. For example, the wall 50 may be a side wall of the room 100 or a floor of the room 100.

The opening 70 may be formed by penetrating the wall 50. At least a portion of the enclosure 1 may be positioned to pass through the opening 70. Specifically, the portion of the enclosure 1 may be positioned to pass through the opening 70, so that the portion of the enclosure 1 may be positioned at the inside of the room 100. The wireless communication device 10 (desirably, an antenna 12 of the wireless communication device 10) may be positioned at an inside of the portion of the enclosure 1 positioned at the inside of the room 100. This assists the wireless communication device 10 to further smoothly communicate with the other wireless communication device existing at the inside of the room 100 by allowing a wireless signal of the wireless communication device 10 not to be interfered.

The opening 70 may be formed to the wall 50 to correspond to the enclosure 1. Specifically, the opening 70 may be formed to correspond to a size of the enclosure 1, a frame part 2, or a sealing part 6. For example, the opening 70 may be formed to have a diameter or width equal to or slightly larger than a diameter or width of the enclosure 1, the frame part 2, or the sealing part 6.

In an example embodiment, the enclosure 1 for the protection of the wireless communication device may include the frame part 2 that forms a space receiving the wireless communication device 10.

The frame part 2 may form the space that receives the wireless communication device 10. Specifically, the frame part 2 may include a wall, a pillar, or a structure similar thereto that forms the space receiving the wireless communication device 10. For example, the wireless communication device 10 may be surrounded by the wall, the pillar, or the structure similar thereto to be protected from a foreign substance or external impact.

In an example embodiment, the frame part 2 may form an entrance 22 that allows the wireless communication device 10 to be accessible from the outside of the room 100. This assists a worker repairing or maintaining the wireless communication device 10 to work at the outside of the room 100 without entering the inside of the room 100. The entrance 22 may be formed in at least a portion of areas of the frame part 2, which are exposed at an outside of the clean room.

In an example embodiment, the enclosure 1 may include the cover 8 which covers the entrance 22. The cover 8 may perform a role of preventing a foreign substance from flowing into the enclosure 1 or the frame part 2 through the entrance 22. This may prevent the wireless communication device 10 from being damaged due to an inflow of the foreign substance to the enclosure 1 or the frame part 2 through the entrance 22.

The cover 8 may be manufactured with a material identical to or different from that of the frame part 2 or the sealing part 6. As an example, in order to secure sufficient strength, a material of the cover 8 may be polycarbonate. As another example, the material of the cover 8 may be ultra high molecular weight (UHMW) polyethylene. This may reduce attenuation of wireless signal strength due to the cover 8.

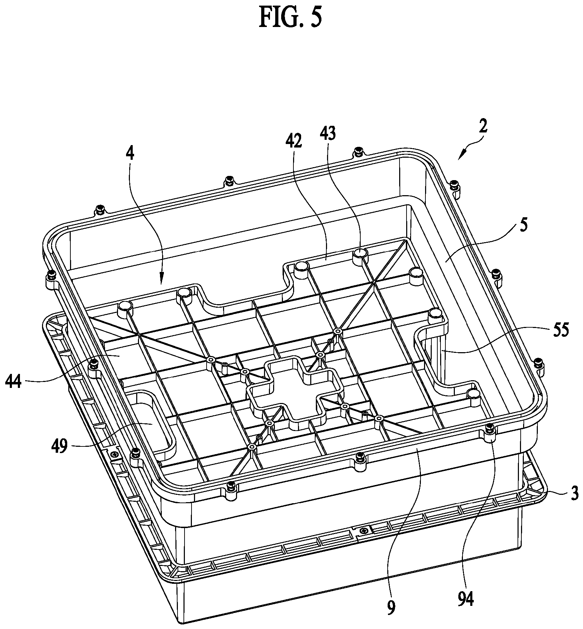

The cover 8 may be manufactured to have a shape, a diameter, or a width corresponding to a shape, a diameter, or a width of the entrance 22. Specifically, the cover 8 may be manufactured to entirely cover or hide the entrance 22. The cover 8 may be configured to placed on the frame part 2, but referring to FIG. 5, the cover 8 may be fastened to the enclosure 1 or the frame part 2 by using a cover fastening part 94 provided to the enclosure 1 or the frame part 2. To this end, a fastening member such as a screw or a rivet may penetrate the cover 8 and the cover fastening part 94.

In an example embodiment, the enclosure 1 may further include the sealing ring 92 which is provided at a boundary of the frame part 2 to seal a gap formed between the cover 8 and frame part 2. Specifically, the sealing ring 92 may be positioned at a cover contact part 9 of the frame part 2 to be positioned between surfaces on which the cover 8 and the frame part 2 are in contact with each other. This may prevent the wireless communication device 10 from being damaged due to the foreign substance passing through the gap between the frame part 2 and the cover 8 and the inflow of the foreign substance to the enclosure 1 or the frame part 2. A material of the sealing ring 92 may be a material known in the art, such as rubber, silicon, or the like, to fill the gap. A shape of the sealing ring 92 may be a shape corresponding to the frame part 2, the cover 8, or the cover contact part 9. For example, when the cover contact part 9 has a circular shape, the sealing ring 92 may also has a circular shape having a diameter equal or similar to that of the cover contact part 9.

In an example embodiment, the enclosure 1 for the protection of the wireless communication device may include a mount 4 that is mounted to the frame part 2 and positions the wireless communication device 10 so that the antenna 12 of the wireless communication device 10 faces the inside of the room 100.

The mount 4 assists the wireless communication device 10 to be positioned at an appropriate position. Specifically, the wireless communication device 10 may be fixed to the mount 4. For example, the mount 4 may include a fastening structure that allows one side of the wireless communication device 10 to be fit to the mount 4 or fastened with the fastening member such as the screw or the rivet.

The mount 4 also assists the antenna 12 of the wireless communication device 10 to be oriented in an appropriate direction. According to an example embodiment shown in FIG. 1, the wireless communication device 10 and the antenna 12 of the wireless communication device 10 are positioned toward the inside of the room 100 by the mount 4. This may allow a wireless signal of the antenna 12 to be further properly sent to the inside of the room 100, so that the wireless communication device 100 may perform smoother communication with other wireless communication devices positioned at the inside of the room 100.

The mount 4 may be manufactured with a material identical to or different from that of the frame part 2 or the sealing part 6. As an example, in order to secure sufficient strength, a material of the mount 4 may be polycarbonate. As another example, the material of the mount 4 may be ultra high molecular weight (UHMW) polyethylene. This may reduce attenuation of the wireless signal strength due to the mount 4.

In an example embodiment, the frame part 2 may include a support part 5 on which the mount 4 is placed, and the mount 4 may be fixed to the frame part 2 so as to be separable. When a repair of the mount 4 or a wireless network device 10 is required, this may allow the worker to perform the repair by separating only the mount 4 from the frame part 2 or the enclosure 1 without need of separating the enclosure 1 from the wall 50. Such an example embodiment is shown in FIG. 1. The support part 5 may support at least one area of the mount 4, for example, a horizontal outside area of the mount 4, so that the mount 4 is allowed not to fall into the room 100 by gravity. However, a shape of the support part 5 is not limited to a shape in FIG. 1. As an example, the support part 5 may have a structure of a valley to be configured so that one side of the mount 4 is fit to the valley. As another example, as illustrated in FIG. 5, the support part 5 may have a fastening structure 55 that allows the one side of the mount 4 to be fastened with the fastening member such as the screw or the rivet. Various example embodiments of the mount 4 will be described below in further detail.

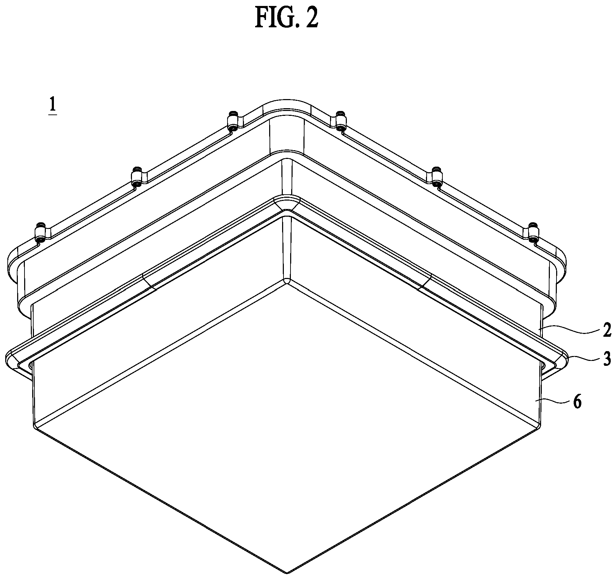

FIG. 2 illustrates a perspective diagram in which the enclosure 1 for the protection of the wireless communication device according to the present disclosure is viewed from below. In a description together with reference to FIG. 1, in an example embodiment, the enclosure 1 for the protection of the wireless communication device may further include a fixation part 3 that fixes the enclosure 1 to the wall 50 at an outward side 52 of the wall 50 so that the enclosure 1 may be separated from the wall 50 toward an outside of the room 100.

The fixation part 3 may fix the enclosure 1 to the wall 50 at the outward side 52 of the wall 50, and through this, the enclosure 1 may be separated from the wall 50 toward the outside of the room 100. This may minimize unnecessary contamination of the room 100 as a worker may assemble or separate the enclosure 1 to or from the wall 50 without entering and exiting from the room 100. However, the present disclosure is not limited thereto. For example, the fixation part 3 may fix the enclosure 1 to the wall 50 at an inward side 51 of the wall 50, and through this, the enclosure 1 may be separated from the wall 50 toward an inside of the room 100. Although an outside space of the room 100 is narrow, or although the worker is unable to enter or exit from the outside space of the room 100, this may allow the worker to enter and exit from the room 100 to assemble or separate the enclosure 1 to or from the wall 50.

In FIG. 1, the fixation part 3 of the enclosure 1 is illustrated as being placed on the wall 50 which is positioned at a ceiling, particularly on the outward side 52 of the wall 50. This may allow the enclosure 1 to be further simply placed on the wall 50 by gravity because the wall 50 is positioned at the ceiling.

However, the present disclosure is not limited thereto. For example, the wall 50 may be a side wall or a floor of the room 100 or positioned at the side wall or the floor. Even in this case, the fixation part 3 may fix the enclosure 1 to the wall 50 at the outward side 52 or the inward side 51 of the wall 50 so that the enclosure 1 may be separated from the wall 50 toward the outside or the inside of the room 100. As an example, the fixation part 3 may include a structure corresponding to an end, of the wall 50, near the opening 70 so that the end of the wall 50 is fit to the fixation part 3. As another example, the fixation part 3 may include a fastening structure that may be fastened to the wall 50 with a fastening member such as a screw or a rivet.

In an example embodiment, the enclosure 1 for the protection of the wireless communication device may include the sealing part 6 which is included in or connected to the frame part 2 to surround the wireless communication device 10 so that the wireless communication device 10 is not exposed to the inside of the room 100. The sealing part 6 performs a role of protecting the wireless communication device 10 from a foreign substance in the room 100. In order to minimized interference with or attenuation of a wireless signal due to the wall 50, the wireless communication device 10 or the antenna 12 may face the inside of the room 100 or may be positioned toward the inside of the room 100 further than the outside of the room 100. At this point, the sealing part 6 may have a shape convexly protruding from the wall 50 toward the inside of the room 100 so as to entirely hide the wireless communication device 10 or the antenna 12 which is exposed further toward the inside of the room 100.

The sealing part 6 may be a member coupled or connected to the frame part 2, but may be included in the frame part 2 or manufactured to be integrally formed together with the frame part 2. When the sealing part 6 is not coupled or connected to the frame part 2 as a member separate from the frame part 2, a gap that may occur in a coupling region of the sealing part 6 and the frame part 2 may not be additionally filled.

In an example embodiment, a material of the sealing part 6 may be ultra high molecular weight (UHMW) polyethylene so that signal strength is less attenuated or less affected when a signal of the wireless network device 10 is sent to another wireless network device through the sealing part 6, or when a signal of the other wireless network device is sent to the wireless network device 10 through the sealing part 6. However, the present disclosure is not limited thereto. The material of the sealing part 6 may be a known material that may less attenuate the wireless signal while the wireless signal passes through the sealing part 6.

In an example embodiment, the enclosure 1 for the protection of the wireless communication device may further include a sealing member 54 that seals a gap 53 between the sealing part 6 and the wall 50. The sealing member 54 may have a known material for sealing, such as silicon. The sealing member 54 may block incoming of a foreign substance from the outside of the room 100 to the inside of the room 100 through the the gap 53 and prevent a heat exchange or an air exchange between the inside and the outside of the room 100 through the gap 53 so that a temperature, humidity, or a pressure of the inside of the room 100 is further properly adjusted. In addition, the sealing member 54 may have predetermined adhesive strength to assist the enclosure 1 or the frame part 2 to be further properly fixed to the wall 50. In an example embodiment, the enclosure 1 for the protection of the wireless communication device may include a cap 56 that protects the sealing member 54 by covering the sealing member 54. Referring to FIG. 1, the cap 56 is illustrated as being positioned at a gap between the inward side 51 of the wall and the frame part 2, but the present disclosure is not limited thereto. For example, the cap 56 may be positioned at a gap between the outward side 52 of the wall and the frame part 2. In order to minimize an influence on the wireless signal which passes through the sealing part 6, a material of the cap 56 may be ultra high molecular weight (UHMW) polyethylene. This may prevent the sealing member 54 from being changed in character by a washing substance or another substance at the inside or the outside of the room 100 or from being damaged by internal or external impact to the room 100.

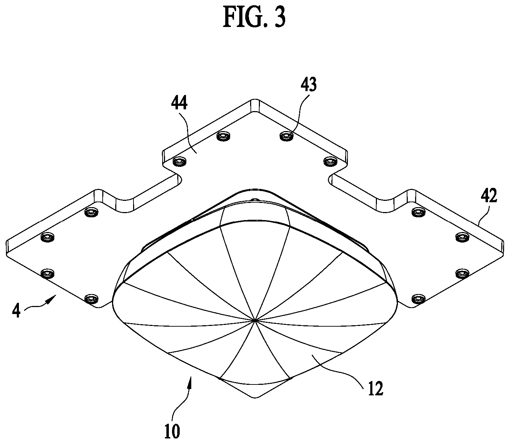

FIGS. 3 through 5 illustrate the mount 5, the wireless communication device 10, the frame part 2, and a structure of a combination thereof.

In an example embodiment, the mount 4 may include a coupling part 42 that is in contact with or supported by the support part 5 of the enclosure 1. The coupling part 42 may include a structure that may be in contact with or caught on the support part 5 so that the mount 4 is placed on the support part 5. For example, as illustrated in FIG. 5, the mount 4 or the coupling part 42 may include a fastening part 43 or the like, and a fastening member such as a screw or a rivet may be fastened to the fastening part 43 and the fastening structure 55 of the support part 5, so that the mount 4 may be fixed to the enclosure 1 or the frame part 2. In addition, in an example embodiment, a portion of the mount 4 or the coupling part 42 may be placed on the support part 5, so that the mount 4 may be placed on the enclosure 1 or the frame part 2. This may form a contact surface between the support part 5 and the mount 4 or the coupling part 42, so that the mount 4 may be further stably placed on the support part 5.

In an example embodiment, the mount 4 may include a device mounting part 44 at which the wireless communication device 10 is positioned. The device mounting part 44 or the mount 4 may include a fastening part 45 or the like so that the wireless communication device 10 or the antenna 12 may be fastened and fixed to the device mounting part 44. The fastening member such as the screw or the rivet may be fastened to the fastening part 45, so that the wireless communication device 10 or the antenna 12 may be further tightly fixed to the device mounting part 44 or the mount 4.

In an example embodiment, the device mounting part 44 may include a surface convexly protruding from the coupling part 42 toward an inside of the room 100 unlike illustrations in FIGS. 3 through 5. This may allow the wireless communication device 10 or the antenna 12 which are positioned at the device mounting part 44 to be positioned toward the inside of the room 100 to be exposed further toward the inside of the room 100, and through this, interference with or attenuation of a wireless signal due to the wall 50 may be minimized.

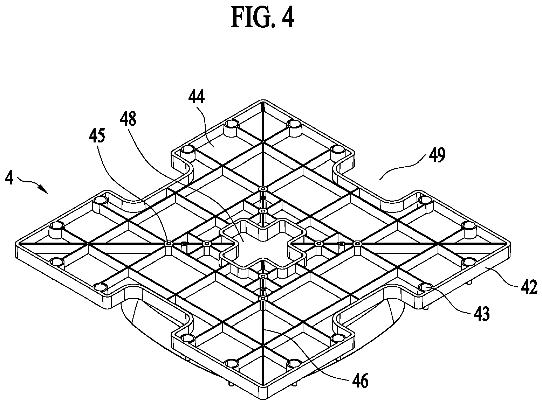

In an example embodiment, the enclosure 1, the frame part 2, the mount 4, and the sealing part 6 may include a reinforcement member for reinforcing rigidity. For example, as illustrated in FIGS. 4 through 5, the mount 4 may include a rib 46. The rib 46 may be disposed to one surface of the mount 4 in a form of a lattice or disposed in a direction of a diagonal line crossing a center of the one surface of the mount 4. Specifically, the rib 46 may be disposed to the device mounting part 44 in the form of the lattice or disposed in a direction of a diagonal line crossing a center of the device mounting part 44. Also specifically, the rib 46 may be disposed to the coupling part 42. This may allow the mount 4, the coupling part 42, or the device mounting part 44 to further properly bear a weight due to self-mass thereof as well as a weight of the wireless communication device 10 or the antenna 12, so that the mount 4, the coupling part 42, or the device mounting part 44 is less changed in shape.

In an example embodiment, the mount 4 may include one or more openings 48 and 49. An opening 48 may be positioned at a center of the mount 4 or the device mounting part 44. Also, an opening 49 may be positioned at a side portion of the mount 4 or the device mounting part 44. This may assist wiring or the like connected to the wireless communication device 10 or the antenna 12 to pass through. Furthermore, this may also assist a finger of a worker to pass through to grip the mount 4 when the mount 4 is to be separated from the enclosure 1 or the frame part 2. In addition, the openings 48 and 49 may be formed at a portion to which the wireless communication device 10 or the antenna 12 is not directly mounted, and through this, a weight of the mount 4 may be reduced.

## Claims

1. An enclosure for protection of a wireless communication device positioned at an opening formed to a wall of a room, the enclosure comprising:
a frame part configured to form a space that receives the wireless communication device;
a mount mounted to the frame part and configured to position the wireless communication device so that an antenna of the wireless communication device faces an inside of the room; and
a sealing part included in or connected to the frame part and configured to surround the wireless communication device so that the wireless
communication device is not exposed to the inside of the room.

2. The enclosure for the protection of the wireless communication device of claim 1, further comprising a fixation part configured to fix the enclosure to the wall at an outward side of the wall so that the enclosure is to be separated from the wall toward an outside of the room.

3. The enclosure for the protection of the wireless communication device of claim 1, wherein an entrance is formed to the frame part so that the wireless communication device is accessible from an outside of the room.

4. The enclosure for the protection of the wireless communication device of claim 3, further comprising:
a cover configured to cover the entrance; and
a sealing ring provided at a boundary of the cover and the frame part and
configured to seal a gap formed between the cover and the frame part.

5. The enclosure for the protection of the wireless communication device of claim 1, wherein the frame part comprises a support part on which the mount is placed, and
the mount is fixed to the frame part so as to be separable.

6. The enclosure for the protection of the wireless communication device of claim 1, further comprising a sealing member configured to seal a gap between the sealing part and the wall.

7. The enclosure for the protection of the wireless communication device of claim 6, further comprising a cap configured to protect the sealing member by covering the sealing member.

8. The enclosure for the protection of the wireless communication device of claim 1, wherein the wall is positioned at a ceiling of the room.

9. The enclosure for the protection of the wireless communication device of claim 1, wherein a material of the sealing part is ultra high molecular weight (UHMW) polyethylene.

10. The enclosure for the protection of the wireless communication device of claim 1, wherein the room is a clean room.
